(19) Europäisches Patentamt / European Patent Office / Office européen des brevets

(11) **EP 1 920 224 B1**

(12) **EUROPÄISCHE PATENTSCHRIFT**

(45) Veröffentlichungstag und Bekanntmachung des Hinweises auf die Patenterteilung:
**30.09.2015 Patentblatt 2015/40**

(51) Int Cl.:
***G01H 1/00*** ^(2006.01)

(21) Anmeldenummer: **06764290.0**

(22) Anmeldetag: **02.08.2006**

(86) Internationale Anmeldenummer:
**PCT/EP2006/064939**

(87) Internationale Veröffentlichungsnummer:
**WO 2007/025830 (08.03.2007 Gazette 2007/10)**

(54) **VERFAHREN UND VORRICHTUNG ZUR ÜBERWACHUNG DES DYNAMISCHEN VERHALTENS EINER ROTIERENDEN WELLE, INSBESONDERE EINER GAS- ODER DAMPFTURBINE**

METHOD AND APPARATUS FOR THE SURVEILLANCE OF THE DYNAMIC BEHAVIOUR OF A ROTATING SHAFT, ESPECIALLY OF A GAS OR STEAM TURBINE

MÉTHODE ET APPAREIL POUR SURVEILLER LE COMPORTEMENT DYNAMIC D'UN ARBRE TOURNANT, EN PARTICULIER D'UNE TURBINE DE GAS OU DE VAPEUR

(84) Benannte Vertragsstaaten:
**CH DE ES GB IT LI**

(30) Priorität: **31.08.2005 EP 05018868**

(43) Veröffentlichungstag der Anmeldung:
**14.05.2008 Patentblatt 2008/20**

(73) Patentinhaber: **Siemens Aktiengesellschaft 80333 München (DE)**

(72) Erfinder:
• **BORGER, Thomas**
  **64846 Klein-zimmern (DE)**
• **SIEBERLING, Hans-Günther**
  **65719 Hofheim (DE)**
• **TROCKEL, Raimund**
  **64367 Mühltal (DE)**
• **BOETIUS, Joachim**
  **13187 Berlin (DE)**

(56) Entgegenhaltungen:
**US-A- 4 027 539       US-A- 4 464 935
US-A1- 2002 108 444**

• **PATENT ABSTRACTS OF JAPAN Bd. 010, Nr. 238 (M-508), 16. August 1986 (1986-08-16) -& JP 61 070218 A (HITACHI LTD), 11. April 1986 (1986-04-11)**

**Beschreibung**

Die Erfindung betrifft ein Verfahren zur Überwachung des dynamischen Schwingungsverhaltens einer rotierenden Welle in einer Maschine, welche zwei, ein orthotropes Koordinatensystem bildende Hauptsteifigkeitsachsen aufweist.. Die Erfindung betrifft weiterhin eine Vorrichtung, welche die Durchführung des Verfahrens gewährleistet.

Bei einem sich drehenden Teil einer Maschine, beispielsweise in einer Dampf- oder Gasturbinenanlage werden die Leistungen immer größer. Dies geht bei beispielsweise einer Dampfturbine, mit der Gewichtszunahme des Rotors und der Zunahme des Abstands der Zentren einher. Die damit verbundenen erhöhten Schwingungen werden bei der Betriebsinstandhaltung immer wichtiger, da zu große Schwingungen zu irreparablen Schäden an der Maschine führen. Deshalb wird ein Grenzbereich angeben, innerhalb dessen sich die Schwingungswerte bewegen dürfen. Das Überschreiten dieser Grenzwerte kann zu einer Abschaltung der gesamten Anlage führen.

Verfahren und entsprechende Vorrichtungen zur Überwachung des dynamischen Schwingungsverhaltens von rotierenden Maschinenteilen sind beispielsweise aus den Veröffentlichungen US 4 027 539 A, US 2002/108444 A1 und US 4 464 935 A bekannt.

Häufige Starts und Stopps der Turbinen führen weiterhin zu anormalen Schwingungen, welche zu Beschädigung der Maschine führen können. Eine hohe Präzision bei der Überwachung der Schwingungen ist daher notwendig.

Aufgabe der Erfindung ist die Angabe eines verbesserten Verfahrens zur Überwachung des Schwingungsverhaltens einer rotierenden Welle. Eine weitere Aufgabe ist die Angabe einer verbesserten Vorrichtung die insbesondere eine Durchführung des Verfahrens erlaubt. Die Vorrichtung und das Verfahren sollen in einer Gasturbine als auch einer Dampfturbine einsetzbar sein.

Die auf das Verfahren bezogene Aufgabe wird erfindungsgemäß gelöst durch ein Verfahren zur Überwachung des dynamischen Schwingungsverhaltens einer rotierenden Welle in einer Maschine, welche zwei ein orthotropes Koordinatensystem bildende Hauptsteifigkeitsachsen aufweist, , wobei Schwingungen durch mindestens zwei, außerhalb der Welle an definierten unterschiedlichen räumlichen Positionen positionierten, ein Koordinatensystem bildende Sensoren erfasst werden, und daraus das dynamische Schwingungsverhalten in dem Koordinatensystem der Sensoren bestimmt wird. Dieses in dem Koordinatensystem der Sensoren bestimmte dynamische Schwingungsverhalten wird anschließend in das orthotrope Koordinatensystem mit den Hauptsteifigkeitsachsen überführt und dann werden die Resonanzbereiche in Richtung der Hauptsteifigkeitsachsen ermittelt.

Der Erfindung liegt folgendes Wissen zugrunde. Überschreitet die Schwingung der Welle einen bestimmten Wert so kann dies zum Abschalten der Maschine führen oder ist mit einem beispielsweise Herunterfahren der Maschine verbunden. Dies ist jedoch mit hohen Kosten und Stillstandzeiten verbunden. Die Schwingungen führen bei nicht rechtzeitigem Abschalten schwere Beschädigungen der Maschine herbei. Die Schwingungen können von Sensoren gemessen werden. Die Erfindung geht weiterhin von der Erkenntnis aus, dass die verschiedenen Frequenzbereiche in jeweils unterschiedlichen Richtungen, ausgehend vom Wellenmittelpunkt, Schäden an der Maschine hervorrufen können. Dies ist dadurch bedingt, dass bei unterschiedlichen Frequenzbereichen die Amplitude in den verschiedenen Richtungen stark ausgebildet ist. Der Frequenzbereich für die Schädigung der Maschine ist daher in den verschiedenen Richtungen unterschiedlich. Dies bedeutet, dass Schwingungen in einem bestimmten Frequenzbereich daher die Maschine besonders in einer bestimmten Richtung schädigen, da sich bei dieser Frequenz besonders in dieser Richtung große Amplituden ausbilden. Für eine andere Richtung stellt dieser Frequenzbereich ein geringeres Gefährdungspotential hinsichtlich Schäden durch Schwingungen dar. Die Erfindung geht nun von dem Ansatz aus, diese Schwingungen mit mindestens zwei Schwingungssensoren zu überwachen. Diese Sensoren werden außerhalb der Welle an unterschiedlichen Stellen positioniert. Dabei ist die Position der Sensoren räumlich bekannt. Die Sensoren erfassen die charakteristischen Messgrößen der Schwingung, beispielsweise Amplitude und Phase der Schwingungen. Aus diesen Daten wird nun das Schwingungsverhalten der Schwingung in mindestens einer Vorzugsrichtung ermittelt. Durch die Ermittlung der Schwingungen in mindestens einer Vorzugsrichtung ist eine bessere Eingrenzung der Frequenzbereiche möglich, welche zu schweren Schäden führen kann. Ein frühzeitiges Abschalten oder Herunterfahren der Maschine wird vermieden. Dadurch werden zum einen Stillstandzeiten und dadurch Kosten gespart. Weiterhin können Betriebsschäden oder aber auch Abnutzungserscheinungen, an der Maschine, die sich in Schwingungsanormalyen äußert, leichter und früher erkannt werden. Damit können schneller Gegenmaßnahmen ergriffen werden. Dies ist beispielsweise der Fall wenn beim Runterlauf der Maschine eine Resonanzfrequenzverschiebung in die mindestens eine Vorzugsrichtung Richtungen festgestellt wird.

Die auf die Vorrichtung bezogene Aufgabe wird erfindungsgemäß gelöst durch eine Vorrichtung zur Überwachung des Schwingungsverhaltens in einer drehbaren Maschine mit drehbaren Teilen welche mindestens zwei Sensoren, eine Welle und eine Berechnungseinheit aufweist, so dass die mindestens zwei Sensoren an einer definierten räumlichen Position außerhalb der Welle positionieren sind und wobei die Sensoren die die Schwingungen charakterisierende Messgrößen erfassen und mit einer Berechnungseinheit zur Übertragung der Daten verbunden sind. Die Vorrichtung ist insbesondere dafür geeignet, dass oben beschriebene Verfahren durchzuführen. Die Vorteile des Verfahrens ergeben sich daher auch für die Vorrichtung.

Weitere Merkmale, Eigenschaften und Vorteile der Erfindung ergeben sich aus der Beschreibung eines Ausführungsbeispiels und aus den weiteren abhängigen Ansprüchen.

Im Folgenden wird die Erfindung beispielhaft anhand einer Zeichnung näher erläutert.

Darin zeigt in vereinfachter und nicht maßstäblicher Darstellung:

FIG 1    eine Welle mit Lagergehäuse, Sensoren und einer Schwingung

FIG 2    ein Ausführungsbeispiel des Verfahrens anhand eines Flussdiagramms, und

FIG 3    einen Ausschnitt eines Frequenzbereichs der Schwingungen in der horizontalen und vertikalen Achse.

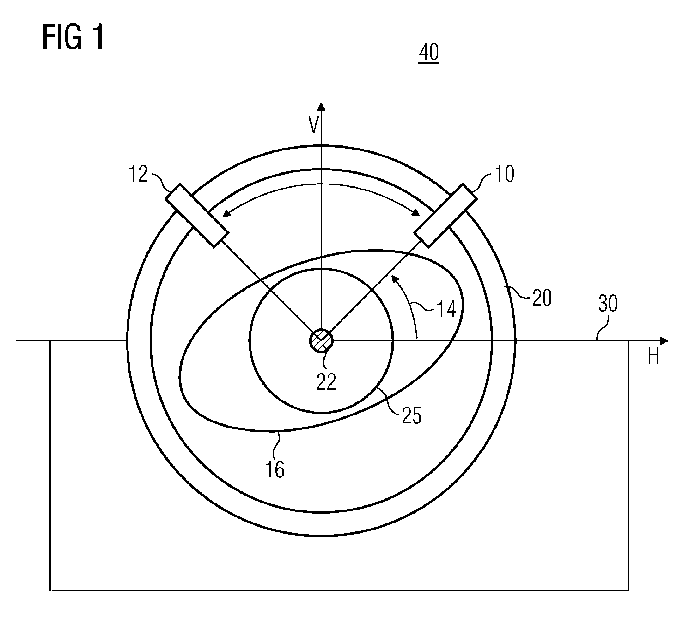

FIG 1 zeigt ein Lagergehäuse 30, welches an einem Grundgerüst 30 befestigt ist und welches weiterhin eine Turbinenwelle 25 aufweist. An dem Lagergehäuse 30 werden zwei Sensoren 10,12 bevorzugt im 90 Grand Winkel voneinander beabstandet, befestigt.

Die Maschine 40 weist dabei zwei Hauptsteifigkeitsachsen V, H (orthotropes Koordinatensystem) auf, die in diesem Ausführungsbeispiele als die vertikale Richtung V und die horizontale Richtung H dargestellt sind. Die Hauptsteifigkeitsachsen V,H fallen mit den vertikalen Richtung V und der horizontalen Richtung H zusammen. Die Sensoren sind unter einem Winkel ß, 14, gegen die Achse H eingebaut.

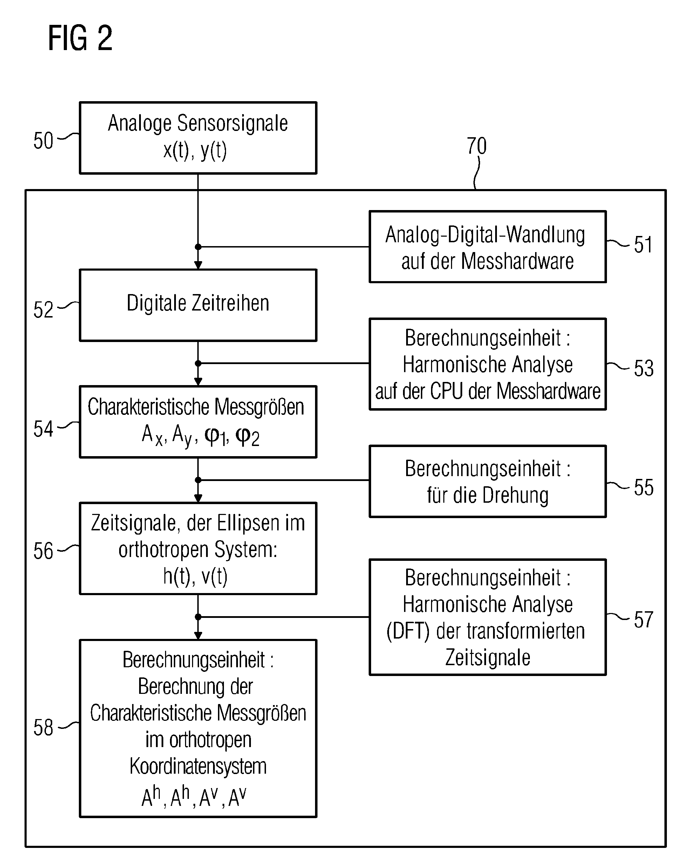

Aufgrund von beispielsweise Dehnungsfugen ist die Positionierung der Sensoren am Lagergehäuse 30 nicht überall möglich. So können die Sensoren 10, 12 z.B. nicht in Richtung der Hauptsteifigkeitsachsen V, H der Maschine 40 angebracht werden. Durch die Drehung der Turbinenwelle 25 werden nun Schwingungen ausgelöst. Überschreiten diese einen bestimmten Grenzwert besteht Gefahr, dass die Maschine beschädigt wird. Der Anteil der Grundschwingung der kinetischen Wellenbahn (Orbit) bildet weist die Form einer Ellipse auf. Die Schwingungen bilden sich in einer Ellipsenwelle 16 aus. Diese werden durch die Sensoren 10 und 12 aufgenommen, 50 in FIG 2, und liefern ein analoges Signal. Die Ellipsenwelle 16 wird durch die von beiden Sensoren, 10,12 gemessenen Amplituden und Phasen eindeutig festgelegt.

Die Ellipsenwelle 16 wird durch vier gemessenen Größen im kartesischen Koordinatensystem der Sensoren wie folgt beschrieben:

$$\begin{pmatrix} x(t) \\ y(t) \end{pmatrix} = \begin{pmatrix} A_x \bullet \sin(\omega t + \varphi_1) \\ A_y \bullet \sin(\omega t + \varphi_2) \end{pmatrix}$$

Das analoge Signal wird nun mittels eines Analog-DigitalWandlers, 51 in FIG 2, in ein digitales Signal, 52 in FIG 2, umgewandelt. Aus diesem werden nun die für die Ellipsenwelle 16 relevante Größen, also im Wesentlichen die Phase und die Amplitude extrahiert, Berechnungseinheit 53 in FIG 2. Dies kann auf der Messhardware erfolgen. Diese Größen liegen in dem Koordinatensystem der Sensoren vor, 54 in FIG 2. Mittels einer Berechnungseinheit werden diese Größen auf das Koordinatensystem der Hauptachse der Maschine transformiert, 55 in FIG 2.

Das entspricht einer Drehung des obigen Vektors aus x(t) und y(t) um -ß.

Eine Drehmatrix für die Drehung um den Winkel -ß hat die folgende Gestalt:

$$\begin{bmatrix} \cos\beta & \sin\beta \\ -\sin\beta & \cos\beta \end{bmatrix}$$

Nach der Drehung kann das Signal in horizontaler (h(t)) und vertikaler Richtung (v(t)) wie folgt beschrieben werden, 56 in FIG 2:

$$\begin{pmatrix} h(t) \\ v(t) \end{pmatrix} = \begin{pmatrix} A_x \bullet \cos\beta \bullet \sin(\omega t + \varphi_1) - A_y \bullet \sin\beta \bullet \sin(\omega t + \varphi_2) \\ A_x \bullet \sin\beta \bullet \sin(\omega t + \varphi_1) + A_y \bullet \cos\beta \bullet \sin(\omega t + \varphi_2) \end{pmatrix}$$

Diese Signale werden analytisch einer Diskrete FourierTransformation DFT zugeführt und so die Komponenten des harmonischen Vektors berechnet, Berechnungseinheit 57 in FIG 2. Exemplarisch sieht das für den horizontalen Anteil wie folgt aus. Dabei sind die Komponenten mit $A_{sin}$ für den Sinus-Anteil und $A_{cos}$ für den Cosinus-Anteil bezeichnet.

$$A^h_{\sin} = \frac{2}{T} \int_0^T (A_x \bullet \cos\beta \bullet \sin(\omega t + \varphi_1) \bullet \sin\omega t - A_y \bullet \sin\beta \bullet \sin(\omega t + \varphi_2) \bullet \sin\omega t)dt$$

$$A^h_{\cos} = \frac{2}{T} \int_0^T (A_x \bullet \cos\beta \bullet \sin(\omega t + \varphi_1) \bullet \cos(\omega t) - A_y \bullet \sin\beta \bullet \sin(\omega t + \varphi_2) \bullet \cos(\omega t))dt$$

$$mit : T = \frac{2\pi}{\omega}$$

Für die Auswertung ist es hilfreich, die folgenden Integrale zu berechnen:

$$\frac{2}{T} \int_0^T (a \bullet \sin(\omega t + \varphi) \bullet \sin \omega t)dt =$$

$$\frac{2a}{T} \int_0^T ((\sin(\omega t) \bullet \cos \varphi + \cos(\omega t) \bullet \sin \varphi) \bullet \sin \omega t)dt =$$

$$\frac{2a}{T} \int_0^T \sin^2(\omega t) \bullet \cos \varphi \, dt =$$

$$a \bullet \cos \varphi$$

*Ebenso* :

$$\frac{2}{T} \int_0^T (a \bullet \sin(\omega t + \varphi) \bullet \cos \omega t)dt =$$

$$\frac{2a}{T} \int_0^T ((\sin(\omega t) \bullet \cos \varphi + \cos(\omega t) \bullet \sin \varphi) \bullet \cos \omega t)dt =$$

$$\frac{2a}{T} \int_0^T \cos^2(\omega t) \bullet \sin \varphi \, dt =$$

$$a \bullet \sin \varphi$$

Nutzt man diese Ergebnisse, so lassen sich die einzelnen Komponenten ermitteln, Berechnungseinheit 58 in FIG 2:

$$A^h_{\sin} = \frac{2}{T} \int_0^T (A_x \bullet \cos\beta \bullet \sin(\omega t + \varphi_1) \bullet \sin\omega t - A_y \bullet \sin\beta \bullet \sin(\omega t + \varphi_2) \bullet \sin\omega t)dt$$

$$= A_x \bullet \cos\beta \bullet \cos\varphi_1 - A_y \bullet \sin\beta \bullet \cos\varphi_2$$

$$A^h_{\cos} = \frac{2}{T} \int_0^T (A_x \bullet \cos\beta \bullet \sin(\omega t + \varphi_1) \bullet \cos\omega t - A_y \bullet \sin\beta \bullet \sin(\omega t + \varphi_2) \bullet \cos\omega t)dt$$

$$= A_x \bullet \cos\beta \bullet \sin\varphi_1 - A_y \bullet \sin\beta \bullet \sin\varphi_2$$

$$A_{\sin}^v = \frac{2}{T} \int_0^T (A_x \bullet \sin \beta \bullet \sin(\omega t + \varphi_1) \bullet \sin \omega t + A_y \bullet \cos \beta \bullet \sin(\omega t + \varphi_2) \bullet \sin \omega t) dt$$

$$= A_x \bullet \sin \beta \bullet \cos \varphi_1 + A_y \bullet \cos \beta \bullet \cos \varphi_2$$

$$A_{\cos}^v = \frac{2}{T} \int_0^T (A_x \bullet \sin \beta \bullet \sin(\omega t + \varphi_1) \bullet \cos \omega t + A_y \bullet \cos \beta \bullet \sin(\omega t + \varphi_2) \bullet \cos \omega t) dt$$

$$= A_x \bullet \sin \beta \bullet \sin \varphi_1 + A_y \bullet \cos \beta \bullet \sin \varphi_2$$

Durch die DFT werden die Parameter der Ellipsenwelle 16 in Richtung der Hauptachse V,H der Maschine berechnet. Dies sind im Wesentlichen die Amplitude und die Phase in die Hauptachsenrichtungen V,H. Durch die Aufspaltung der charakteristischen Größen der Ellipsenwelle 16 auf die Hauptsteifigkeitsachsen H,V der Maschine 40 sind die Resonanzbereiche in die Hauptachsenrichtungen V, H ermittelbar. Mit dieser verbesserten Analyse kann der maschinenschädliche kritische Frequenzbereich genauer ermittelt und eingegrenzt werden.

Weiterhin wird ein zu frühes Abschalten der Maschine 40, welches mit hohen Kosten verbunden ist, vermieden. Die kontinuierliche Überwachung ermöglicht zudem ein schnelles Eingreifen bei Gefahr der Beschädigung der Maschine, welches gerade beim An- und Abschalten der Maschine 40 wichtig ist. Weiterhin können so Schäden die sich durch Abnutzung der Maschine oder Maschinenschäden selbst ergeben leichter erkannt werden.

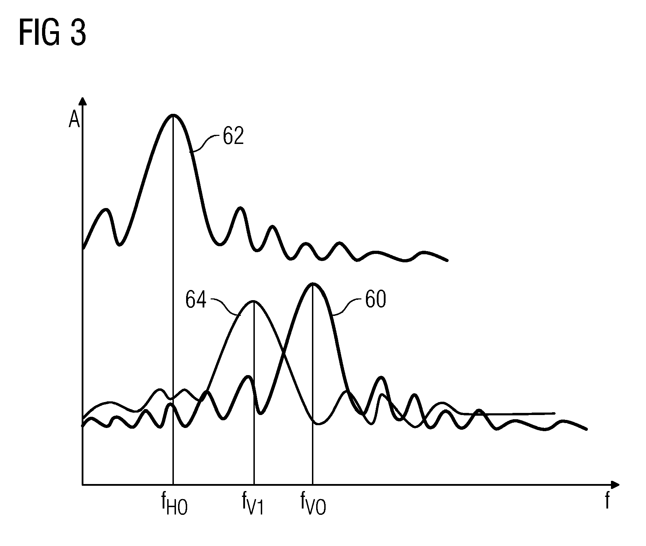

In FIG 3 werden die verschiedenen Frequenzen der Maschine 40 in Richtung der Hauptsteifigkeitsachsen V,H schematisch innerhalb eines Frequenzbereiches aufgezeigt. Dabei sind die Frequenzen f in Abhängigkeit der Amplitude A aufgetragen. Die beiden Achsen H und V weisen bei den unterschiedlichen Frequenzen ein Maximum auf, dabei stellt 62 die Frequenz F in Abhängigkeit von der Amplitude A in Richtung der Achse H auf, 60 stellt die Frequenz F in Abhängigkeit von der Amplitude A in Richtung der Achse V auf. Somit kann der frequenzbezogene kritische Bereich, die Resonanzfrequenz, besser bestimmt werden. Ist die Maschine 40 in Betrieb so kann eine Verschiebung des kritischen Bereiches auftreten. Durch die Bestimmung der Schwingungen in die Richtungen zwei der Hauptsteifigkeitsachsen V,H wird bestimmt wie sich die kritischen Bereiche verschoben haben. In FIG 3 ist eine Verschiebung 64 des kritischen Bereiches in der vertikalen Richtung dargestellt. Die Resonanzfrequenz verschiebt sich hierbei von $f_{V0}$ zu $f_{V1}$. Somit können Maschinenschäden oder Abnutzungserscheinungen an der Maschine leichter erkannt werden und schnell geeignete Gegenmaßnahmen ergriffen werden.

**Patentansprüche**

1. Verfahren zur Überwachung eines dynamischen Schwingungsverhaltens einer rotierenden Welle (25) in einer Maschine (40), welche zwei, ein orthotropes Koordinatensystem bildende Hauptsteifigkeitsachsen (V, H) aufweist, **dadurch gekennzeichnet, dass** Schwingungen durch mindestens zwei, außerhalb der Welle (25) an definierten unterschiedlichen räumlichen Positionen positionierten, ein Koordinatensystem bildende Sensoren (10, 12) erfasst werden,
   dass aus den durch die Sensoren (10, 12) erfassten Schwingungen das dynamische Schwingungsverhalten in dem Koordinatensystem der Sensoren (10, 12) bestimmt wird, dass das in dem Koordinatensystem der Sensoren (10, 12) bestimmte dynamische Schwingungsverhalten in das orthotrope Koordinatensystem mit den Hauptsteifigkeitsachsen (V, H) überführt wird und anschließend die Resonanzbereiche in Richtung der Hauptsteifigkeitsachsen (V, H) ermittelt werden.

2. Verfahren nach Anspruch 1,
   **dadurch gekennzeichnet, dass** das dynamische Schwingungsverhalten durch eine Amplitude und eine Phase in jeweils einer Koordinatenachse des jeweiligen Koordinatensystems beschrieben wird.

3. Verfahren nach Anspruch 1 oder Anspruch 2,
   **dadurch gekennzeichnet, dass** die Amplitude und die Phase des dynamischen Schwingungsverhaltens jeweils in den Richtungen der Hauptsteifigkeitsachsen (V, H) des orthotropen Koordinatensystems ermittelt werden.

4. Verfahren nach Anspruch 3,

**dadurch gekennzeichnet, dass** die Amplituden und Phasen des dynamischen Schwingungsverhaltens in den Richtungen der Hauptsteifigkeitsachsen (V, H) mittels einer Diskreten Fourier Transformation (DFT) ermittelt werden.

5. Verfahren nach Anspruch 4,
   **dadurch gekennzeichnet, dass** aus den Amplituden und Phasen des dynamischen Schwingungsverhaltens in den Richtungen der Hauptsteifigkeitsachsen (V, H) Resonanzbereiche in den Hauptachsenrichtungen (V, H) ermittelt werden.

6. Verfahren einem der vorherigen Ansprüche,
   **dadurch gekennzeichnet, dass** die Schwingungen kontinuierlich ausgewertet werden.

7. Verfahren einem der vorherigen Ansprüche,
   **dadurch gekennzeichnet, dass** von den Sensoren (10, 12) erzeugte Sensorsignale analog sind.

8. Verfahren einem der vorherigen Ansprüche,
   **dadurch gekennzeichnet, dass** die analogen Sensorsignale in digitale Zeitreihen umgewandelt werden.

9. Verfahren einem der vorherigen Ansprüche,
   **dadurch gekennzeichnet, dass** eine harmonische Analyse der digitalen Zeitreihen erfolgt, wobei charakteristische Messgrößen der Schwingungen ermittelt werden.

10. Verfahren einem der vorherigen Ansprüche,
    **dadurch gekennzeichnet, dass** das Verfahren bei einer Dampfturbine oder einer Gasturbine angewendet wird.

11. Verfahren nach Anspruch 5, eingesetzt zu der Überwachung des dynamischen Schwingungsverhalten, wobei die Resonanzbereiche in den Hauptachsenrichtungen (V, H) kontinuierlich ermittelt und hinsichtlich einer Verschiebung eines Resonanzbereichs in einer der Hauptachsenrichtung (V, H) überwacht werden.

12. Verfahren nach Anspruch 11, wobei, wenn eine Verschiebung festgestellt wird, ein Maschinenschaden oder eine Abnutzungserscheinung erkannt wird und eine geeignete Gegenmaßnahme ergriffen wird.

13. Drehbare Maschine (40) mit einer Welle (25) und mit einer Vorrichtung zur Überwachung des Schwingungsverhaltens der drehbaren Maschine (40), welche mindestens zwei Sensoren (10, 12) und eine Berechnungseinheit aufweist, wobei die mindestens zwei Sensoren (10, 12) jeweils an einer definierten räumlichen Position außerhalb der Welle (25) positioniert sind und Schwingungen an den definierten räumlichen Positionen erfassen,
    **dadurch gekennzeichnet, dass** die Berechnungseinheit (70) eingerichtet ist zur Durchführung eines Verfahrens nach mindestens einem der voranstehenden Verfahrensansprüchen.

14. Vorrichtung nach dem voranstehenden Vorrichtungsanspruch,
    **dadurch gekennzeichnet, dass** die Sensoren (10, 12) am Lagergehäuse befestigt sind.

15. Vorrichtung nach mindestens einem der voranstehenden Vorrichtungsansprüchen,
    **dadurch gekennzeichnet, dass** die Sensoren Schwingungssensoren (10, 12) wird.

16. Vorrichtung nach mindestens einem der voranstehenden Vorrichtungsansprüchen,
    **dadurch gekennzeichnet, dass** die Berechnungseinheit (70) einen Analog-Digital-Wandler umfasst.

17. Vorrichtung nach mindestens einem der voranstehenden Vorrichtungsansprüchen,
    **dadurch gekennzeichnet, dass** die Sensoren (10, 12) zu einer Signalübertragung mit dem Analog-Digital-Wandler (51) verbunden sind.

18. Vorrichtung nach mindestens einem der voranstehenden Vorrichtungsansprüchen,
    **dadurch gekennzeichnet, dass** die Berechnungseinheit (70) mehrere Berechnungseinheiten für analytische Berechnungen umfasst.

19. Vorrichtung nach mindestens einem der voranstehenden Vorrichtungsansprüchen,
    **dadurch gekennzeichnet, dass** die Berechnungseinheit (70) ein Gefahrenmeldungssystem umfasst.

**20.** Vorrichtung nach mindestens einem der voranstehenden Vorrichtungsansprüchen,
**dadurch gekennzeichnet, dass** die Sensoren (10, 12) derart angeordnet sind, dass sie einen Winkel von 90 Grad entgegen dem Uhrzeigersinn aufspannen.

**21.** Gasturbine oder Dampfturbine mit einer Vorrichtung der Ansprüche 13 bis 20.


**Claims**

**1.** Method for monitoring a dynamic vibration behaviour of a rotating shaft (25) in a machine (40) which has two main stiffness axes (V, H) forming an orthotropic coordinate system,
**characterised in that**
vibrations are detected by at least two sensors (10, 12) forming a coordinate system, positioned outside the shaft (25) at defined different spatial positions,
the dynamic vibration behaviour in the coordinate system of the sensors (10, 12) is determined from the vibrations detected by the sensors (10, 12)
the dynamic vibration behaviour determined in the coordinate system of the sensors (10, 12) is transferred into the orthotropic coordinate system with the main stiffness axes (V, H) and subsequently the resonance ranges in the direction of the main stiffness axes (V, H) are determined.

**2.** Method according to claim 1,
**characterised in that** the dynamic vibration behaviour is described by an amplitude and a phase in a coordinate axis of the respective coordinate system in each case.

**3.** Method according to claim 1 or claim 2,
**characterised in that** the amplitude and the phase of the dynamic vibration behaviour are each determined in the directions of the main stiffness axes (V, H) of the orthotropic coordinate system.

**4.** Method according to claim 3,
**characterised in that** the amplitudes and phases of the dynamic vibration behaviour are determined in the directions of the main stiffness axes (V, H) by means of a discrete Fourier transformation (DFT).

**5.** Method according to claim 4,
**characterised in that** resonance ranges in the main axis directions (V, H) are determined from the amplitudes and phases of the dynamic vibration behaviour in the directions of the main stiffness axes (V, H).

**6.** Method according to one of the preceding claims,
**characterised in that** the vibrations are continuously evaluated.

**7.** Method according to one of the preceding claims,
**characterised in that** sensor signals created by the sensors (10, 12) are analogue.

**8.** Method according to one of the preceding claims,
**characterised in that** the analogue sensor signals are converted into digital time series.

**9.** Method according to one of the preceding claims,
**characterised in that** a harmonic analysis of the digital time series is undertaken, wherein characteristic measured values of the vibrations are determined.

**10.** Method according to one of the preceding claims,
**characterised in that** the method is applied for a steam turbine or a gas turbine.

**11.** Method according to claim 5, used for monitoring the dynamic vibration behaviour, wherein the resonance ranges are continuously determined in the main axis directions (V, H) and are monitored in respect of a shift of a resonance range in one of the main axis directions (V, H).

**12.** Method according to claim 11, wherein, when a shift is identified, damage to the machine or a wear occurrence is recognised and a suitable countermeasure is taken.

**13.** Rotatable machine (40) with a shaft (25) and with a device for monitoring the vibration behaviour of the rotatable machine (40), which has at least two sensors (10, 12) and a computation unit, wherein the at least two sensors (10, 12) are positioned at a defined spatial position outside the shaft (25) and detect vibrations at the defined spatial positions,
**characterised in that** the computation unit (70) is configured to carry out a method according to at least one of the preceding method claims.

**14.** Device according to one of the preceding claims,
**characterised in that** the sensors (10 12) are attached to the bearing housing.

**15.** Device according to at least one of the preceding claims,
**characterised in that** the sensors are vibration sensors (10, 12).

**16.** Device according to at least one of the preceding claims,
**characterised in that** the computation unit (70) comprises an analogue-digital converter.

**17.** Device according to at least one of the preceding claims,
**characterised in that** the sensors (10, 12) are connected to the analogue-digital converter (51) for signal transmission.

**18.** Device according to at least one of the preceding claims,
**characterised in that** the computation unit (70) comprises a number of computation units for analytical computations.

**19.** Device according to at least one of the preceding claims,
**characterised in that** the computation unit (70) comprises an alarm system.

**20.** Device according to at least one of the preceding claims
**characterised in that** the sensors (10, 12) are disposed so that they cover an angle of 90 degrees in the anticlockwise direction.

**21.** Gas turbine or steam turbine with a device according to claims 13 to 20.

**Revendications**

**1.** Procédé de contrôle du comportement dynamique en oscillation d'un arbre ( 25 ) tournant dans une machine ( 40 ), qui a deux axes ( V, H ) de rigidité principaux formant un système de coordonnées orthotrope,
**caractérisé en ce qu'**on détecte des oscillations par au moins deux capteurs ( 10, 12 ) formant un système de coordonnées et placés à l'extérieur de l'arbre ( 25 ) en des positions dans l'espace définies différentes,
**en ce qu'**on détermine le comportement dynamique en oscillation dans le système de coordonnées des capteurs ( 10, 12 ) à partir des oscillations détectées par les capteurs ( 10, 12 ),
**en ce qu'**on transforme le comportement dynamique en oscillation déterminé dans le système de coordonnées des capteurs ( 10, 12 ) dans le système de coordonnées orthotrope ayant les axes ( V, H ) de rigidité principaux et on détermine ensuite les domaines de résonance dans la direction des axes ( V, H ) de rigidité principaux.

**2.** Procédé suivant la revendication 1,
**caractérisé en ce qu'**on décrit le comportement dynamique en oscillation par une amplitude et par une phase dans respectivement un axe de coordonnées du système de coordonnées respectif.

**3.** Procédé suivant la revendication 1 ou la revendication 2,
**caractérisé en ce qu'**on détermine l'amplitude et la phase du comportement dynamique en oscillation respectivement dans les directions des axes ( V, H ) de rigidité principaux du système de coordonnées orthotrope.

**4.** Procédé suivant la revendication 3,
caractérisé en qu'on détermine les amplitudes et les phases du comportement dynamique en oscillation dans les directions des axes ( V, H ) de rigidité principaux au moyen d'une transformation de Fourier discrète ( TFD ).

**5.** Procédé suivant la revendication 4,

**caractérisé en ce qu'**on détermine les amplitudes et les phases du comportement dynamique en oscillation dans les directions des axes ( V, H ) de rigidité principaux au moyen des domaines de résonance dans les directions des axes ( V, H ) principaux.

**6.** Procédé suivant l'une des revendications précédentes,
**caractérisé en ce qu'**on évalue les oscillations en continu.

**7.** Procédé suivant l'une des revendications précédentes,
**caractérisé en ce que** des signaux de capteur produits par les capteurs ( 10, 12 ) sont analogiques.

**8.** Procédé suivant l'une des revendications précédentes,
**caractérisé en ce que** les signaux de capteur analogiques sont transformés en des séries chronologiques numériques.

**9.** Procédé suivant l'une des revendications précédentes,
**caractérisé en ce qu'**on effectue une analyse harmonique des séries chronologiques numériques, des grandeurs de mesure caractéristiques des oscillations étant déterminées.

**10.** Procédé suivant l'une des revendications précédentes,
**caractérisé en ce qu'**on applique le procédé à une turbine à vapeur ou à une turbine à gaz.

**11.** Procédé suivant la revendication 5, utilisé pour le contrôle du comportement dynamique en oscillation, les domaines de résonance dans les directions des axes ( V, H ) principaux étant déterminés en continu et étant contrôlés en ce qui concerne un décalage d'une région de résonance dans l'une des directions des axes ( V, H ) principaux.

**12.** Procédé suivant la revendication 11, dans lequel, si on constate un décalage, on reconnaît un endommagement de machine ou un phénomène d'usure et on prend une contre-mesure appropriée.

**13.** Machine ( 40 ) tournante comprenant un arbre ( 25 ) et un dispositif de contrôle du comportement en oscillation de la machine ( 40 ) tournante, qui a au moins deux capteurs ( 10, 12 ) et une unité de calcul, les au moins deux capteurs ( 10, 12 ) étant mis en une position dans l'espace définie à l'extérieur de l'arbre ( 25 ) et des oscillations étant détectées aux positions dans l'espace définies, **caractérisée en ce que** l'unité ( 70 ) de calcul est agencée pour effectuer un procédé suivant au moins l'une des revendications de procédé précédentes.

**14.** Dispositif suivant la revendication de dispositif précédente,
**caractérisé en ce que** les capteurs ( 10, 12 ) sont fixés au logement du palier.

**15.** Dispositif suivant au moins l'une des revendications de dispositif précédentes,
**caractérisé en ce que** les capteurs sont des capteurs ( 10, 12 ) d'oscillations.

**16.** Dispositif suivant au moins l'une des revendications de dispositif précédentes,
**caractérisé en ce que** l'unité ( 70 ) de calcul comprend un convertisseur analogique-numérique.

**17.** Dispositif suivant au moins l'une des revendications de dispositif précédentes,
**caractérisé en ce que** les capteurs ( 10, 12 ) sont reliés à un convertisseur ( 51 ) analogique-numérique pour une transmission de signal.

**18.** Dispositif suivant au moins l'une des revendications de dispositif précédentes,
**caractérisé en ce que** l'unité ( 70 ) de calcul comprend plusieurs unités de calculs analytiques.

**19.** Dispositif suivant au moins l'une des revendications de dispositif précédentes,
**caractérisé en ce que** l'unité ( 70 ) de calcul comprend un système d'avertissement de danger.

**20.** Dispositif suivant au moins l'une des revendications de dispositif précédentes,
**caractérisé en ce que** les capteurs ( 10, 12 ) sont disposés de manière à sous-tendre un angle de 90 degrés dans le sens inverse des aiguilles d'une montre.

**21.** Turbine à gaz ou turbine à vapeur ayant un dispositif suivant l'une des revendications 13 à 20.

# FIG 1

<u>40</u>

## FIG 2

50 — Analoge Sensorsignale
x(t), y(t)

70

51 — Analog-Digital-Wandlung
auf der Messhardware

52 — Digitale Zeitreihen

53 — Berechnungseinheit :
Harmonische Analyse
auf der CPU der Messhardware

54 — Charakteristische Messgrößen
$A_x, A_y, \varphi_1, \varphi_2$

55 — Berechnungseinheit :
für die Drehung

56 — Zeitsignale, der Ellipsen im
orthotropen System:
h(t), v(t)

57 — Berechnungseinheit :
Harmonische Analyse
(DFT) der transformierten
Zeitsignale

58 — Berechnungseinheit :
Berechnung der
Charakteristische Messgrößen
im orthotropen
Koordinatensystem
$A^h, A^h, A^v, A^v$

FIG 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4027539 A
- US 2002108444 A1
- US 4464935 A